# DEMANDE DE BREVET EUROPEEN

(11) **EP 4 506 091 A1**
(43) Date de publication de la demande: **12.02.2025**
(21) Numéro de dépôt: 23191122.3
(22) Date de dépôt: 11.08.2023
(51) Int. Cl.: B23B 29/24

(54) **TOURELLE COMPRENANT UNE PLURALITÉ DE BROCHES PORTE-OUTILS ET MACHINE-OUTIL À COMMANDE NUMÉRIQUE COMPORTANT UNE TELLE TOURELLE**

(71) Demandeur: ETA SA Manufacture Horlogère Suisse, 2540 Grenchen (CH)
(72) Inventeur: PHAM, Patric, 3427 Utzenstorf (CH); DONZÉ, Christophe, 2542 Pieterlen (CH)
(74) Mandataire: ICB SA

(57) **Abrégé**

L'invention concerne une tourelle (10) comprenant un corps (11) s'étendant selon un axe A-A, ce dernier comprenant à l'une de ses extrémités une embase (12) de fixation à une machine-outil (20) à commande numérique et à l'autre extrémité une tête (13) mobile en rotation, la tête (13) comportant au moins deux broches (14, 14', 14") porte-outils, chacune étant destinée à recevoir en engagement un outil de coupe (15, 15', 15"), les broches (14, 14', 14") occupant, selon la position angulaire de la tête (13), une position de travail dans laquelle elles sont destinées à réaliser une opération d'usinage d'une pièce maintenue en position dans un posage (21) ou une position d'attente dans laquelle elles sont en retrait de la pièce, chacune desdites broches (14, 14', 14") étant configurée pour être pilotée indépendamment de l'autre afin d'immobiliser ou d'entraîner en rotation l'outil de coupe (15, 15', 15") qu'elle porte, quelle que soit la position qu'elle occupe.

## Description

### Domaine technique de l'invention

L'invention relève du domaine des machines-outils à commande numérique destinées à l'usinage de pièces préférentiellement micromécaniques et de celui des équipements de telles machines.

Plus particulièrement, l'invention concerne une tourelle comprenant une pluralité de broches porte-outils et une machine-outil à commande numérique comportant une telle tourelle.

### Arrière-plan technologique

Les machines-outils à commande numérique sont destinées à produire des pièces en série, notamment par usinage, en suivant les consignes d'un programme informatique. Ces machines comportent un outil monté dans une broche porte-outil et sont généralement équipées d'un changeur d'outils afin d'échanger l'outil maintenu par la broche porte-outil pour l'adapter aux opérations d'usinage à réaliser sur la pièce maintenue en position dans un posage.

Lors d'un changement d'outil, la machine-outil n'est plus productive dans le sens où les opérations d'usinage sont interrompues. Il est donc recherché de minimiser la durée de changement d'outil. À cet effet, des changeurs d'outils ont été développés pour travailler au maximum en temps masqué et minimiser les temps de pause des machines-outils afin d'augmenter leur productivité.

Par exemple, on connait les tourelles multibroches comprenant une tête sur laquelle sont agencées plusieurs broches porte-outils parmi lesquelles une est active et les autres sont au repos. En particulier, la broche porte-outil active est en prise avec un mécanisme d'entraînement grâce à un système d'accouplement. Ainsi, entre deux opérations d'usinage, le changement d'outil peut être réalisé par désaccouplement de la broche porte-outil active, c'est-à-dire celle portant l'outil à changer, rotation de la tête de sorte à présenter la broche porte-outil suivante et accouplement de cette broche porte-outil avec le mécanisme d'entraînement.

Cette solution ne donne toutefois pas entière satisfaction dans la mesure où, bien qu'ils soient réduits, les temps de changement d'outil ne sont pas entièrement masqués. En effet, entre chaque changement d'outil, avec ce type de tourelle multibroches, il est nécessaire de freiner l'outil à changer avant de réaliser le changement d'outil et d'accélérer l'outil suivant une fois qu'il est accouplé au mécanisme d'entraînement, jusqu'à ce qu'il atteigne sa vitesse de rotation d'usinage. Ces tourelles multibroches requièrent également un certain laps de temps pour désaccoupler l'outil à changer, pivoter la tête et indexer l'outil suivant afin de l'aligner avec le système d'accouplement, puis réaliser l'accouplement. Aussi, cette solution est particulièrement complexe et onéreuse du fait du système d'accouplement.

Il existe des tourelles multibroches répondant à la problématique d'accélération et de freinage de broche porte-outil, dans lesquelles les outils sont tous entraînés en rotation, de façon synchrone. Ainsi, lors du changement d'outil, l'outil suivant est déjà entraîné à sa vitesse de rotation d'usinage et peut débuter l'opération d'usinage de la pièce. Ces tourelles multibroches engendrent cependant une consommation de grandes quantités d'énergie pour entraîner en rotation l'ensemble des outils de façon simultané. Par ailleurs, la vitesse de rotation maximale des outils qu'elles portent est relativement limitée du fait de la chaine cinématique de transmission de mouvement.

Globalement, qu'elles entraînent en rotation les outils qu'elles portent de façon individuelle ou simultanée, les tourelles multibroches de l'état de la technique sont volumineuses, ce qui engendre des moments d'inertie importants et augmente le risque de collision entre le posage et les outils portés par la tourelle.

On comprend qu'en plus des inconvénients précités, ces solutions ne sont pas adaptés pour l'usinage de pièces micromécaniques.

### Résumé de l'invention

L'invention résout les inconvénients précités en proposant une solution permettant de masquer complètement les temps de changement d'outil, notamment en masquant les phases d'accélération et de décélération des outils. Un autre objectif atteint par l'invention est de maximiser la compacité de la machine-outil et de réduire les masses en mouvement.

À cet effet, la présente invention concerne une tourelle comprenant un corps s'étendant selon un axe A-A, ce dernier comprenant à l'une de ses extrémités une embase de fixation à une machine-outil à commande numérique et à l'autre extrémité une tête mobile en rotation. La tête comporte au moins deux broches porte-outils, chacune étant destinée à recevoir en engagement un outil de coupe. Les broches occupent, selon la position angulaire de la tête, une position de travail dans laquelle elles sont destinées à réaliser une opération d'usinage d'une pièce maintenue en position dans un posage, ou une position d'attente dans laquelle elles sont en retrait de la pièce. Chacune desdites broches étant configurée pour être pilotée indépendamment de l'autre afin d'immobiliser ou d'entraîner en rotation l'outil de coupe qu'elle porte, quelle que soit la position qu'elle occupe.

Les broches étant asservies de manière indépendante, il est rendu possible d'accélérer et de décélérer les broches en temps masqué. La présente invention permet donc de réaliser un changement d'outil avec un temps mort réduit uniquement à la durée de la rotation de la tête jusqu'à ce que l'outil suivant entre en contact avec la pièce à usiner. Grâce aux caractéristiques de l'invention, on estime le temps de changement d'outil, copeaux à copeaux, de l'ordre de quelques dixièmes de secondes.

L'invention a également pour avantage de pouvoir être d'adaptée sur toute machine-outil existante.

Aussi, grâce à l'invention, les broches peuvent atteindre des vitesses de rotation relativement élevées, par exemple de l'ordre de 60000 à 80000 tours par minute.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, l'axe de rotation de la tête est confondu avec l'axe A-A.

Dans des modes particuliers de réalisation, l'embase est configurée de sorte que l'axe A-A forme un angle compris entre 35 et 55 degrés par rapport à un axe vertical.

Ces caractéristiques participent à maximiser la compacité du dispositif.

Dans des modes particuliers de réalisation, les broches sont réparties autour de l'axe de rotation de la tête, préférentiellement de façon régulière, chaque broche étant agencée de sorte que son axe B-B, B-B' et B-B" forme un angle compris entre 35 et 55 degrés par rapport à l'axe A-A et de sorte que leurs axes B-B, B-B' et B-B" ne soient pas sécants entre eux.

Cette caractéristique permet, d'une part, de favoriser le dégagement des outils au repos afin d'éviter ou de limiter les risques de collisions avec le posage, et d'autre part, de conserver une même position de travail pour l'ensemble des broches et donc participe à assurer le respect des tolérances d'usinage.

Dans des modes particuliers de réalisation, les broches sont agencées les unes par rapport aux autres de sorte que la projection de leurs axes longitudinaux B-B, B-B' et B-B" dans un plan P orthogonal à l'axe A-A forme un polygone régulier d'ordre n centré sur l'axe A-A, avec n le nombre de broche.

Dans des modes particuliers de réalisation, les broches sont agencées de sorte que leurs axes longitudinaux B-B, B-B' et B-B" soient séparés de l'axe A-A par une distance supérieure au rayon d'une broche.

Cette caractéristique participe également à favoriser le dégagement des outils au repos afin d'éviter ou de limiter les risques de collisions avec le posage.

Dans des modes particuliers de réalisation, chacune des broches comprend un moteur qui lui est propre pour l'entraînement en rotation ou l'immobilisation de l'outil de coupe qu'elle porte.

Cette caractéristique permet de réduire la consommation d'énergie de la tourelle dans la mesure où les broches qui ne réalisent pas d'opération d'usinage sont immobiles en rotation autour de leurs axes longitudinaux respectifs.

Dans des modes particuliers de réalisation, au moins une broche est adaptée à occuper au moins deux positions de travail distinctes, chacune desquelles étant définie par une position angulaire prédéfinie de la tête de la tourelle.

Dans des modes particuliers de réalisation, au moins une broche est adaptée à occuper une position de travail de façon continue lors d'une rotation de la tête de la tourelle. Cette disposition implique également un mouvement continu du posage.

Selon un autre objet, la présente invention concerne une machine-outil à commande numérique pour l'usinage de pièces préférentiellement micromécaniques, comprenant au moins une tourelle telle que précédemment décrite, fixée par l'embase directement à un bâti ou à un chariot mobile en translation dans un plan vertical, de sorte que l'axe A-A forme un angle compris entre 35 et 55 degrés par rapport à un axe vertical, ladite machine-outil comprenant en outre un posage destiné à maintenir une pièce à usiner en position.

Dans des modes particuliers de réalisation, la machine-outil comporte deux tourelles agencées de part et d'autre du posage.

Dans des modes particuliers de réalisation, la machine-outil comprend des parois de protection contre les projections de copeaux et de liquide de coupe, le corps de la ou de chaque tourelle étant engagé dans une ouverture respectivement de ladite ou desdites parois de protection de façon étanche aux liquides.

Encore un autre aspect de l'invention concerne un procédé de changement d'outil d'une machine-outil telle que précédemment décrite, dans lequel :
- un premier outil de coupe engagé dans une broche en position de travail réalise une première phase d'usinage et un second outil de coupe engagé dans une broche en position d'attente est destiné à réaliser une seconde phase d'usinage et est immobile en rotation ;
- avant la fin de la première phase d'usinage, le second outil de coupe est entrainé en rotation selon son axe B-B' jusqu'à atteindre une vitesse de rotation propre à la seconde phase d'usinage ;
- une fois la première phase d'usinage achevée, la tête est pivotée selon l'axe A-A de sorte à entraîner en position de travail la broche portant le second outil de coupe afin que ce dernier débute la seconde phase d'usinage, et de sorte à entraîner en position d'attente la broche portant le premier outil de coupe, ce dernier étant immobilisé en rotation une fois que la broche qui le porte a atteint sa position d'attente.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue en perspective d'une tourelle multibroches selon un exemple de réalisation préféré de l'invention ;
- la figure 2 représente une vue de la tourelle de la figure 1, orientée selon l'axe longitudinal du corps de la tourelle ;
- la figure 3 représente une vue de côté de la tourelle de la figure 1 ;
- la figure 4 représente une vue en perspective de deux tourelles agencées de part et d'autre d'un posage d'une pièce à usiner.

On note que les figures ne sont pas nécessairement dessinées à l'échelle pour des raisons de clarté.

### Description détaillée de l'invention

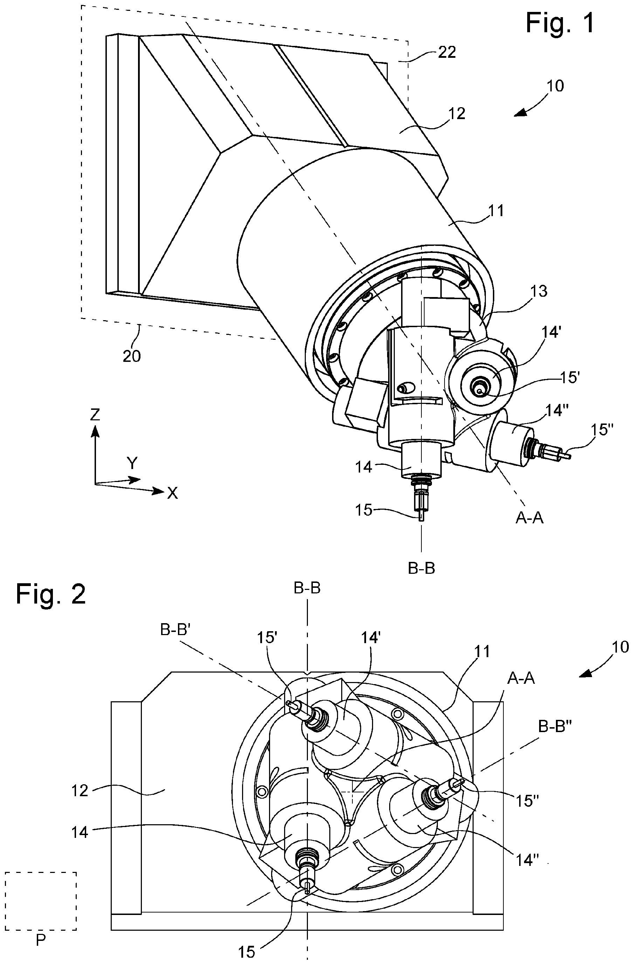

La figure 1 montre une tourelle 10 destinée à l'usinage de pièces préférentiellement micromécaniques. La tourelle 10 comprend un corps 11 s'étendant selon un axe longitudinal noté « axe A-A », comprenant à l'une de ses extrémités une embase 12 de fixation à une machine-outil 20 à commande numérique et à l'autre extrémité une tête 13 mobile en rotation autour d'un axe confondu avec l'axe A-A, dans l'exemple de réalisation de l'invention. La tête 13 comporte au moins deux broches 14, 14' ou 14" porte-outils, chacune destinée à recevoir en engagement un outil de coupe 15, 15' ou 15". Selon la position angulaire de la tête 13, chaque broche 14, 14' et 14" occupe une position de travail, dans laquelle elle est destinée à réaliser une opération d'usinage d'une pièce maintenue en position dans un posage 21, ou une position d'attente, dans laquelle elle est en retrait de la pièce.

Il y a lieu de noter que la tourelle 10 peut être entraînée en translation, par exemple si l'embase 12 est fixée à un chariot de la machine-outil 20 (non représenté sur les figures) mobile selon au moins un degré de liberté en translation, préférentiellement selon trois degrés de liberté en translation en référence à un trièdre XYZ.

Alternativement, la tourelle 10 peut être immobile, par exemple si l'embase 12 est fixée directement à un bâti 22 de la machine-outil 20.

Les broches 14, 14' et 14" sont avantageusement configurées de sorte à être pilotées indépendamment l'une de l'autre ou les unes des autres afin d'entraîner en rotation ou d'immobiliser l'outil de coupe 15, 15' ou 15" qu'elles portent. Cette caractéristique est particulièrement avantageuse lors d'un changement d'outil. Préférentiellement, les broches 14, 14' et 14" sont des broches de type motorisées, aussi appelées « électrobroches », et comprennent chacune un moteur qui lui est propre pour l'entraînement en rotation ou l'immobilisation de l'outil de coupe 15, 15' ou 15" qu'elles portent.

En particulier, afin de changer un premier outil de coupe 15 réalisant une première phase d'usinage, par un second outil de coupe 15' destiné à réaliser une seconde phase d'usinage, ce dernier est entrainé en rotation, avant la fin de la première phase d'usinage, jusqu'à atteindre une vitesse de rotation propre à la seconde phase d'usinage.

Le premier outil de coupe 15 est engagé dans une broche 14 en position de travail et le second outil de coupe 15' est engagé dans une broche 14' en position d'attente.

Une fois la première phase d'usinage achevée, la tête 13 est pivotée de sorte à entraîner en position d'attente la broche 14 qui était en position de travail, et de sorte à entraîner en position de travail la broche 14' qui était en position d'attente. La seconde phase d'usinage débute alors immédiatement, grâce au fait que le second outil de coupe 15' ait atteint sa vitesse de rotation d'usinage lorsque que la broche 14' dans laquelle il est engagé était en position d'attente. La broche 14 portant le premier outil de coupe 15 étant maintenant en position d'attente, ce dernier est alors immobilisé.

Ainsi, la mise en rotation du second outil de coupe 15' et l'arrêt en rotation du premier outil de coupe 15 étant réalisés en temps masqué, le changement d'outil de coupe est réalisé avec un temps mort réduit uniquement à la durée de la rotation de la tête.

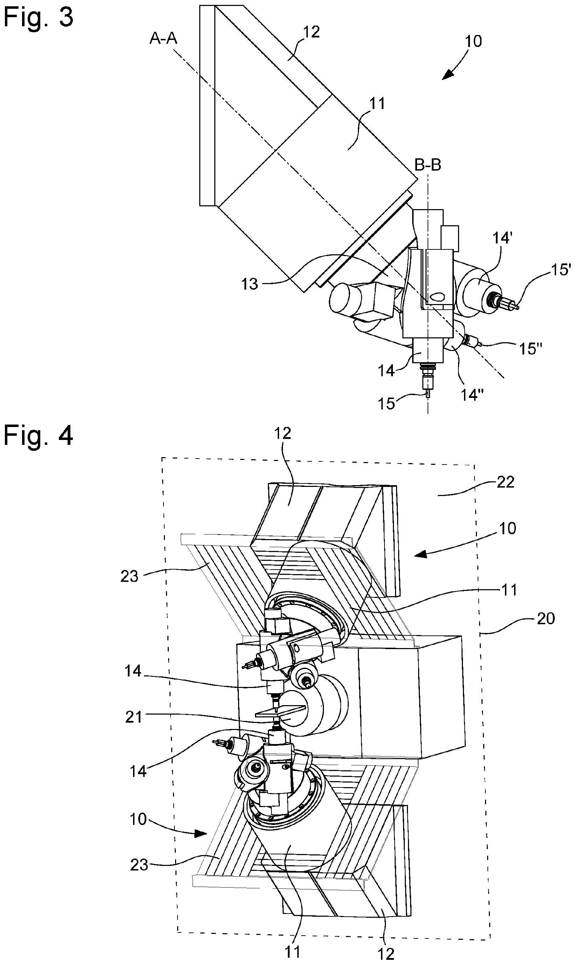

Chaque broche 14, 14' et 14" s'étend respectivement selon un axe longitudinal noté « axe B-B », « axe B-B' » et « axe B-B" », constituant également leur axe de rotation, cet axe étant uniquement représenté sur la broche 14 en position de travail sur les figures 1 et 3. Comme visible sur ces figures, dans la position de travail, la broche 14 est orientée de sorte que son axe B-B soit parallèle à un axe vertical. Il est cependant également envisageable que, dans une autre position de travail, la broche 14 soit orientée de sorte que son axe B-B soit parallèle à un axe horizontal. La broche 14 peut également occuper une position de travail dynamique, c'est-à-dire que la tête 13 peut être animée en rotation lors de l'opération d'usinage. Dans ce cas, il est envisageable que le posage 21 soit mobile et déplacé selon des consignes liées à un programme d'usinage, et/ou que la tourelle 10, par son embase 12, soit mobile et déplacée selon des consignes liées au programme d'usinage.

Dans l'exemple préféré de réalisation de l'invention et tel que représenté sur les figures, la tourelle 10 comporte trois broches 14, 14' et 14". Sur la figure 2, qui montre spécifiquement la répartition des broches 14, 14' et 14" sur la tête 13 de la tourelle 10, les broches 14, 14' et 14" sont régulièrement réparties autour de l'axe de rotation de la tête 13, c'est-à-dire dans l'exemple de réalisation de l'invention, autour de l'axe A-A. Les broches 14, 14' et 14" sont agencées les unes par rapport aux autres de sorte que la projection de leurs axes B-B, B-B' et B-B" dans un plan P orthogonal à l'axe A-A forme un polygone régulier d'ordre n centré sur l'axe A-A, avec n le nombre de broches. Dans l'exemple de réalisation représenté sur la figure 2, les axes longitudinaux des broches 14, 14' et 14" forment un triangle équilatéral.

Par ailleurs, dans l'exemple préféré de réalisation de l'invention, les broches 14, 14' et 14" sont agencées de sorte que leurs axes B-B, B-B' et B-B" soient séparés de l'axe A-A par une distance supérieure au rayon d'une broche 14, 14' ou 14", par exemple correspondant au moins au diamètre d'une broche 14, 14' ou 14". Cette disposition permet de maximiser le dégagement des outils de coupe 15' ou 15" des broches 14' et 14" en position d'attente, et ainsi d'éviter les risques de collisions entre ces outils de coupe 15' et 15" et le posage 21 ou la pièce à usiner. Il y a lieu de noter que, de manière générale, plus la tête comporte un nombre important de broches, plus la distance séparant l'axe A-A des axes B-B, B-B' et B-B" des broches est importante.

En outre, comme le montre en particulier la figure 3, la tourelle 10 est configurée de sorte que l'axe A-A forme un angle compris entre 35 et 55 degrés, préférentiellement de 45 degrés, par rapport à un axe vertical grâce à la conformation de l'embase 12. Par conséquent, les broches 14, 14' et 14" sont agencées sur la tête 13 de sorte que leurs axes B-B, B-B' et B-B" sont inclinés par rapport à l'axe A-A d'un angle compris entre 35 et 55 degrés, préférentiellement de 45 degrés, afin qu'ils soient, dans leur position de travail, parallèles avec un axe vertical, tel que décrit précédemment.

Globalement, comme on peut le déduire de ce qui précède et des figures, les broches 14, 14' et 14" sont agencées de façon symétrique les unes par rapport aux autres selon l'axe A-A et les axes B-B, B-B' et B-B" des broches 14, 14' et 14" ne sont pas sécants les uns des autres.

En outre, la disposition particulière des broches 14, 14' et 14" par rapport à la tête 13 de la tourelle 10 permet de réduire la boucle des efforts. En effet, les broches 14, 14' et 14" sont fixées au plus proche de l'élément de liaison, formé par exemple par un roulement à billes, permettant le pivot de la tête 13 par rapport au corps 11 de la tourelle 10.

Par ailleurs, la machine-outil 20 peut comporter deux tourelles 10 agencées de part et d'autre du posage 21, tel que représenté sur la figure 4. Comme le montre cette figure, grâce aux deux tourelles 10, il est envisageable de réaliser deux opérations d'usinage simultanément, sur une même pièce. Avantageusement, les axes de rotation de la broche 14 de chacune des tourelles 10 en position de travail peuvent être confondus.

Le posage 21 peut être constitué par une table destinée à maintenir la pièce en position et présentant des degrés de mobilité en translation et en rotation.

Comme visible sur la figure 4 en transparence, la machine-outil 20 peut présenter des parois de protection 23 contre les projections de copeaux et de liquide de coupe. En particulier, une paroi de protection 23 est agencée de façon étanche aux liquides autour du corps 11 de la ou de chaque tourelle 10, et comprend à cette effet, une ouverture à travers laquelle ledit corps 11 est engagé. L'ouverture peut comporter, sur sa périphérie, un joint racleur agencé contre ledit corps 11. En outre, la paroi de protection 23 peut avantageusement comporter des soufflets. Le joint racleur et les soufflets permettent de conserver une étanchéité aux liquides lors des déplacements de la tourelle dans le trièdre XYZ.

La paroi de protection 23 est fixée au bâti 22 de la machine-outil 20 par sa périphérie.

Par ailleurs, chaque paroi de protection 23 s'étend avantageusement dans un plan orthogonal à l'axe A-A, c'est-à-dire dans un plan incliné par rapport à un axe horizontal, ce qui permet de favoriser l'écoulement du liquide de coupe et des copeaux. Cette disposition permet également de simplifier l'accès au posage 21 et aux broches 14, 14' ou 14" pour un opérateur.

De manière plus générale, il est à noter que les modes de mise en oeuvre et de réalisation considérés ci-dessus ont été décrits à titre d'exemples non limitatifs, et que d'autres variantes sont par conséquent envisageables.

## Revendications

1. Tourelle (10) comprenant un corps (11) s'étendant selon un axe A-A, ce dernier comprenant à l'une de ses extrémités une embase (12) de fixation à une machine-outil (20) à commande numérique et à l'autre extrémité une tête (13) mobile en rotation, la tête (13) comportant au moins deux broches (14, 14', 14") porte-outils, chacune étant destinée à recevoir en engagement un outil de coupe (15, 15', 15"), la tourelle (10) étant **caractérisée en ce que** les broches (14, 14', 14") occupent, selon la position angulaire de la tête (13), une position de travail dans laquelle elles sont destinées à réaliser une opération d'usinage d'une pièce maintenue en position dans un posage (21) ou une position d'attente dans laquelle elles sont en retrait de la pièce, chacune desdites broches (14, 14', 14") étant configurée pour être pilotée indépendamment de l'autre afin d'immobiliser ou d'entraîner en rotation l'outil de coupe (15, 15', 15") qu'elle porte, quelle que soit la position qu'elle occupe.

2. Tourelle (10) selon la revendication 1, dans laquelle l'axe de rotation de la tête (13) est confondu avec l'axe A-A.

3. Tourelle (10) selon la revendication 2, dans laquelle l'embase (12) est configurée de sorte que l'axe A-A forme un angle compris entre 35 et 55 degrés par rapport à un axe vertical.

4. Tourelle (10) selon l'une des revendications 1 à 3, dans laquelle les broches (14, 14', 14") sont réparties autour de l'axe de rotation de la tête (13), chaque broche (14, 14', 14") étant agencée de sorte que son axe B-B, B-B' et B-B" forme un angle compris entre 35 et 55 degrés par rapport à l'axe A-A et de sorte que leurs axes B-B, B-B' et B-B" ne soient pas sécants entre eux.

5. Tourelle (10) selon la revendication 4, dans laquelle les broches (14, 14', 14") sont agencées les unes par rapport aux autres de sorte que la projection de leurs axes B-B, B-B' et B-B" dans un plan P orthogonal à l'axe A-A forme un polygone régulier d'ordre n centré sur l'axe A-A, avec n le nombre de broche (14, 14', 14").

6. Tourelle (10) selon l'une des revendications 1 à 5, dans laquelle les broches (14, 14', 14") sont agencées de sorte que leurs axes B-B, B-B' et B-B" soient séparés de l'axe A-A par une distance supérieure au rayon d'une broche (14, 14', 14").

7. Tourelle (10) selon l'une des revendications 1 à 6, dans laquelle chacune des broches (14, 14', 14") comprend un moteur qui lui est propre pour l'entraînement en rotation ou l'immobilisation de l'outil de coupe (15, 15', 15") qu'elle porte.

8. Tourelle (10) selon l'une des revendications 1 à 7, dans laquelle au moins une broche (14, 14', 14") est adaptée à occuper au moins deux positions de travail distinctes, chacune desquelles étant définie par une position angulaire prédéfinie de la tête (13) de la tourelle (10).

9. Tourelle (10) selon l'une des revendications 1 à 7, dans laquelle au moins une broche (14, 14', 14") est adaptée à occuper une position de travail de façon continue lors d'une rotation de la tête (13) de la tourelle (10).

10. Machine-outil (20) à commande numérique pour l'usinage de pièces préférentiellement micromécaniques, comprenant au moins une tourelle (10) selon l'une des revendications 1 à 9, fixée par l'embase (12) directement à un bâti (22) ou à un chariot mobile en translation selon un trièdre XYZ, de sorte que l'axe A-A forme un angle compris entre 35 et 55 degrés par rapport à un axe vertical, ladite machine-outil comprenant en outre un posage (21) destiné à maintenir une pièce à usiner en position.

11. Machine-outil (20) selon la revendication 10, comportant deux tourelles (10) agencées de part et d'autre du posage (21).

12. Machine-outil (20) selon l'une des revendications 10 ou 11, comprenant des parois de protection (23) contre les projections de copeaux et de liquide de coupe, le corps (11) de la ou de chaque tourelle (10) étant engagé dans une ouverture respectivement de ladite ou desdites parois de protection (23) de façon étanche aux liquides.

13. Procédé de changement d'outil d'une machine-outil (20) selon l'une des revendications 10 à 12, dans lequel :
- un premier outil de coupe (15) engagé dans une broche (14) en position de travail réalise une première phase d'usinage et un second outil de coupe (15') engagé dans une broche (14') en position d'attente est destiné à réaliser une seconde phase d'usinage et est immobile en rotation ;
- avant la fin de la première phase d'usinage, le second outil de coupe (15') est entrainé en rotation selon son axe B-B' jusqu'à atteindre une vitesse de rotation propre à la seconde phase d'usinage ;
- une fois la première phase d'usinage achevée, la tête est pivotée selon l'axe A-A de sorte à entraîner en position de travail la broche (14') portant le second outil de coupe (15') afin que ce dernier débute la seconde phase d'usinage, et de sorte à entraîner en position d'attente la broche (14) portant le premier outil de coupe (15), ce dernier étant immobilisé en rotation une fois que ladite broche (14) qui le porte a atteint sa position d'attente.
